# EUROPÄISCHE PATENTSCHRIFT

(11) **EP 0 679 830 B1**
(45) Veröffentlichungstag und Bekanntmachung des Hinweises auf die Patenterteilung: **14.06.2000**
(21) Anmeldenummer: 95105810.6
(22) Anmeldetag: 19.04.1995
(51) Int. Cl.: F16L 41/03, F24H 9/12

(54) **Rohrkreuzungsfitting**
Pipe branch element
Elément de branchement pour tuyaux

(30) Priorität: 25.04.1994 DE 9406862 U
(43) Veröffentlichungstag der Anmeldung: 02.11.1995
(73) Patentinhaber: Lindner Armaturen GmbH, D-09117 Chemnitz (DE)
(72) Erfinder: Höhne, Falk, D-04179 Leipzig (DE)
(74) Vertreter: Findeisen, Andreas

(56) Entgegenhaltungen:
- DE-U- 9 105 038
- DE-U- 9 317 935
- FR-A- 2 227 489
- GB-A- 1 324 984

## Beschreibung

Die Erfindung betrifft einen Rohrkreuzungsfitting, bestehend aus einem Grundkörper mit zwei separaten Strömungskanälen, denen stirnseitig jeweils kreisförmige Anschlußquerschnitte für Rohrleitungen zugeordnet sind, insbesondere für den Anschluß von Heizkörpern an Rohrleitungen, welche hinter handelsüblichen Fußleisten montiert sind.

Für zahlreiche technische Einsatzgebiete ist die Ausbildung von Kreuzungsstellen an Rohrinstallationen notwendig. Eine typische Problemstelle solcher Installationen ist der Anschluß von Heizkörpern an Rohrleitungen, die unmittelbar über dem Fußboden an der Wand befestigt sind und mit handelsüblichen Fußleisten abgedeckt werden können. Den Fußleisten sind bei dieser Installationsvariante Befestigungsschellen zugeordnet, die dem Abstand der Rohrleitungen angepaßt sind. Wegen des begrenzten Bauraumes sind spezielle Baugruppen notwendig, um den Heizkörperanschluß im Freiraum zwischen dem Innenprofil der Fußbodenleiste sowie Fußboden und Wand ausführen zu können.

Für diesen Einsatzzweck ist bereits ein Heizkörperanschluß bekannt, bei dem für den Anschluß jeder Rohrleitung eine separate Baugruppe verwendet wird. Ein vom unteren Rohr abzweigender Rohrbogen wird hierbei in einer Aussparung des Mauerwerks am oberen Rohr vorbeigeführt (Stand der Technik gemäß Prospekt "Wir bringen Wärme in den Raum" Ausgabe 93/94 der Firma HZ Hans Weitzel GmbH, Ingelheim). Ein wesentlicher Nachteil dieser technischen Lösung besteht jedoch darin, daß ein Vorbeiführen der Abzweigung des unteren Rohres nur möglich ist, sofern hinter dem oberen Rohr genügend freier Bauraum vorhanden Ist. Die Anwendung von "HZ - Heizkörperanschlüssen" erfordert demzufolge überwiegend zusätzliche Arbeitsschritte für den Installateur, beispielsweise eine Aussparung des Mauerwerks hinter dem Rohr. Durch Installation des Rohrkreuzungsstückes gemäß DE 27 23 556 können solche zusätzlichen Arbeiten am Mauerwerk vermieden werden. Alle notwendigen Strömungskanäle für Vorlauf und Rücklauf sowie deren Abgänge sind bei dieser technischen Lösung innerhalb eines Grundkörpers angeordnet. Am Grundkörper sind stirnseitig jeweils kreisförmige Anschlußquerschnitte für die anzuschließenden Rohrleitungen ausgestaltet. Das Rohrkreuzungsstuck kann aufgrund seiner Abmessungen ohne Probleme im vorhandenen Bauraum handelsüblicher Fußleisten montiert werden. Allerdings bedingt diese konstruktive Gestaltung des Grundkörpers in den Strömungskanalen eine Querschnittsverminderung gegenüber den jeweiligen Anschlußquerschnitten der Rohrleitungen, so daß strömungstechnische Nachteile entstehen.

Gegenstand der Erfindung ist ein Rohrkreuzungsfitting, der die Ausgestaltung von Rohrkreuzungen im Bauraum zwischen dem Innenprofil von Fußbodenleisten sowie Fußboden und Wand ohne jegliche Veränderungen am Mauerwerk sowie ohne Querschnittsveränderungen im Strömungskanal der Rohrleitungen ermöglicht.

Erfindungsgemäß wird dies erreicht, indem der erste Strömungskanal im Grundkörper zwischen den Anschlußquerschnitten in einen, zur Mittellängsachse der Anschlußquerschnitte höhenversetzt angeordneten Strömungsabschnitt mit nichtkreisförmigem Querschnitt übergeht, dessen außenliegende Begrenzungswand der zugeordneten längsseitigen Außenwand des Grundkörpers entspricht. Der zweite Strömungskanal ist im Grundkörper zwischen den Anschlußquerschnitten jeweils ohne Richtungs- oder Querschnittsänderung ausgestaltet und weist im Bereich des höhenversetzt angeordneten Abschnittes des ersten Strömungskanals eine zu seiner Längsachse vorzugsweise senkrechte Abzweigung auf, die zwischen der innenliegenden Begrenzungswand des höhenversetzt angeordneten Abschnittes des ersten Strömungskanals und der diesem entgegengesetzten längsseitigen Außenwand des Grundkörpers ausgestaltet ist und in einen kreisförmigen Rohranschlußstutzen übergeht. Der Strömungsquerschnitt des höhenversetzt angeordneten Strömungsabschnittes hat denselben Flächeninhalt wie der Anschlußquerschnitt des zugeordneten ersten Strömungskanals und die vorzugsweise senkrechte Abzweigung hat denselben Flächeninhalt wie der zugeordnete Rohranschlußstutzen.

In Ausgestaltung der Erfindung weist der erste Strömungskanal einen Rohranschlußstutzen auf, der vorzugsweise rechtwinklig zur Mittellängsachse der zugeordneten Anschlußquerschnitte ausgestaltet ist. Besonders vorteilhafte Strömungsverhältnisse im Rohrkreuzungsfitting werden erreicht, sofern der höhenversetzt angeordnete Strömungsabschnitt des ersten Strömungskanals eine annähernd trapezförmige Querschnittsfläche aufweist. Zur Gewährleistung einer einfachen und schnellen Montage wird vorgeschlagen, daß der Abstand zwischen den Anschlußquerschnitten des ersten und zweiten Strömungskanals dem Stichmaß handelsüblicher Befestigungsschellen für Fußleisten entspricht. Der Montageaufwand wird weiterhin vorteilhaft vermindert, wenn der Abstand zwischen den Rohranschlußstutzen des ersten und zweiten Strömungskanals dem Stichmaß von Ventilheizkörpern entspricht.

Die Anwendung des erfindungsgemäßen Rohrkreuzungsfittings ergibt bei der Installation von Heizkörperanschlüssen erhebliche Zeit- und Kosteneinsparungen gegenüber den bekannten Rohrkreuzungen. Es wird eine problemlose und schnelle Montage erreicht, ohne jegliche Eingriffe in die Isolation der Rohrleitungen oder den Estrich der Installationswand. Die konstruktive Ausgestaltung des Grundkörpers bewirkt lediglich geringfügige Richtungsänderungen und Strömungswiderstände. Der vorgeschlagene Rohrkreuzungsfitting ist besonders für eine Kombination mit handelsüblichen Fußleisten geeignet, wobei neben den erwähnten technischen Vorteilen auch ein optisch einwandfreier vertikaler Austritt der Rohranschlüsse aus der Fußleiste erzielt wird.

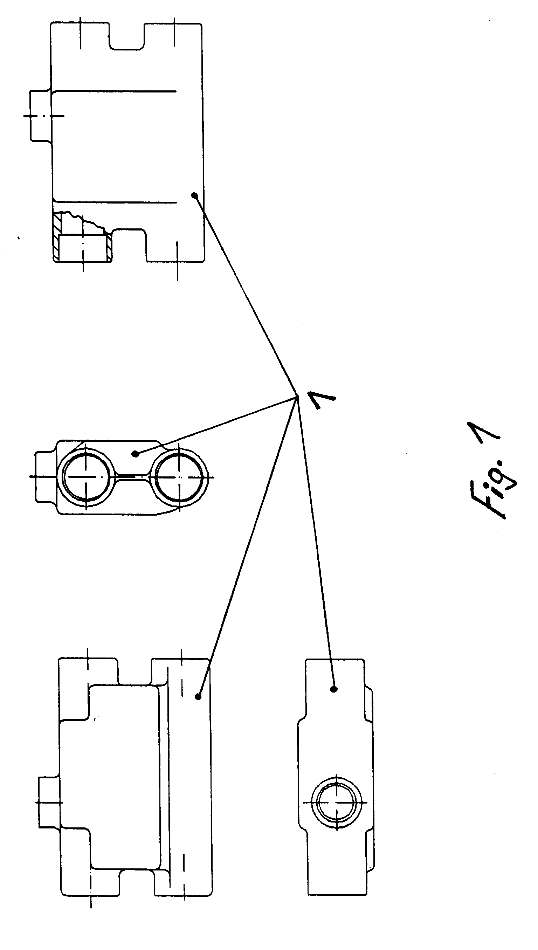

Ein Ausführungsbeispiel der Erfindung ist in der Zeichnung dargestellt und wird nachfolgend beschrieben. Es zeigen
- Fig.1: den Rohrkreuzungsfitting in Vorderansicht, Seitenansicht, Hinteransicht mit teilweise aufgebrochenem Grundkörper und in Draufsicht

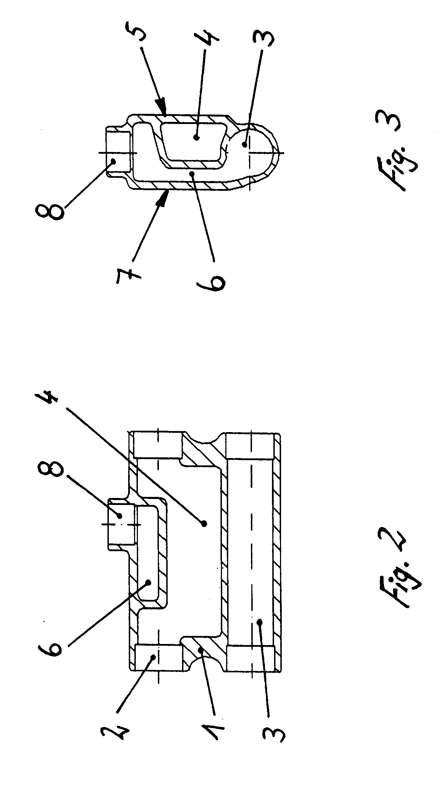

- Fig.2: den Rohrkreuzungsfitting im Längsschnitt
- Fig.3: den Rohrkreuzungsfitting im Querschnitt
- Fig.4: eine weitere Ausgestaltung des Rohrkreuzungsfittings im Längsschnitt.

Der in der Zeichnung dargestellte Rohrkreuzungsfitting besteht aus einem Grundkörper 1, in dem zwei separate Strömungskanäle 2 und 3 ausgestaltet sind. Die Strömungskanäle 2;3 weisen an den Stirnseiten des Grundkörpers 1 jeweils kreisförmige Anschlußquerschnitte auf. Die Anschlußquerschnitte dienen zur Aufnahme von Rohrleitungen, die in der Zeichnung nicht näher dargestellt sind. Der erste Strömungskanal 2 geht im Grundkörper 1 im Bereich zwischen den Anschlußquerschnitten in einen Strömungsabschnitt 4 über. Der Strömungsabschnitt 4 ist zur Mittellängsachse der Anschlußquerschnitte des ersten Strömungskanals 2 höhenversetzt angeordnet und weist einen nichtkreisförmigen Querschnitt auf. Dieser Strömungsabschnitt 4 kann, wie in Fig.3 dargestellt, zum Beispiel eine annähernd trapezförmige Querschnittsfläche aufweisen. Wesentlich ist hierbei, daß der Strömungsabschnitt 4 denselben Flächeninhalt wie der Anschlußquerschnitt des ersten Strömungskanals 2 aufweist. Die außenliegende Begrenzungswand des Strömungsabschnittes 4 entspricht der zugeordneten längsseitigen Außenwand 5 des Grundkörpers 1.

Der zweite Strömungskanal 3 verläuft innerhalb des Grundkörpers 1 zwischen seinen Anschlußquerschnitten ohne Richtungs- oder Querschnittsänderung. Am zweiten Strömungskanal 3 ist im Bereich des Strömungsabschnittes 4 eine Abzweigung 6 vorhanden, die vorzugsweise senkrecht zur Längsachse des Strömungskanals 3 verläuft. Diese Abzweigung 6 ist zwischen der innenliegenden Begrenzungswand des Strömungsabschnittes 4 und der diesem entgegengesetzten längsseitigen Außenwand 7 des Grundkörpers 1 ausgestaltet. Die Abzweigung 6 geht in einen kreisförmigen Rohranschlußstutzen 8 über, wobei die Abzweigung 6 und der Rohranschlußstutzen 8 denselben Flächeninhalt aufweisen.

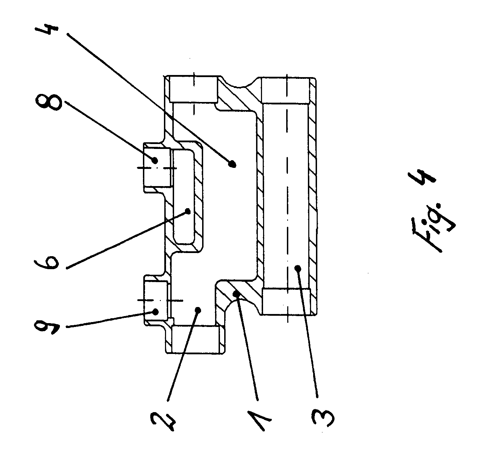

Der Rohrkreuzungsfitting kann, wie in Fig.4 dargestellt, auch am ersten Strömungskanal 2 einen Rohranschlußstutzen 9 aufweisen, der vorzugsweise rechtwinklig zur Mittellängsachse der Anschlußquerschnitte des ersten Strömungskanals 2 ausgestaltet ist.

Der Abstand zwischen den Anschlußquerschnitten des ersten und zweiten Strömungskanals 2 und 3 entspricht zweckmäßig dem Stichmaß handelsüblicher Befestigungsschellen für Fußleisten. Weiterhin ist es vorteilhaft, wenn der Abstand zwischen den Rohranschlußstutzen 9 und 8 des ersten und zweiten Strömungskanals 2 und 3 dem Stichmaß von Ventilheizkörpern entspricht.

Bei Anwendung des Rohrkreuzungsfittings für Heizinstallationen wird z.B. der Strömungskanal 2 mit der Vorlaufleitung und der Strömungskanal 3 mit der Rücklaufleitung verbunden, wobei diese Rohrleitungen unmittelbar an der Wand geführt sind und einschließlich des Rohrkreuzungsfittings mit handelsüblichen Fußleisten abgedeckt werden können. Der Anschluß des Heizkörpers erfolgt über die Rohranschlußstutzen 9 und 8.

## Patentansprüche

1. Rohrkreuzungsfitting, bestehend aus einem Grundkörper mit zwei separaten Strömungskanälen, denen stirnseitig jeweils kreisförmige Anschlußquerschnitte für Rohrleitungen zugeordnet sind, insbesondere für den Anschluß von Heizkörpern an Rohrleitungen, welche hinter handelsüblichen Fußleisten montiert sind,
gekennzeichnet dadurch,
daß der erste Strömungskanal (2) im Grundkörper (1) zwischen den Anschlußquerschnitten in einen, zur Mittellängsachse der Anschlußquerschnitte höhenversetzt angeordneten Strömungsabschnitt (4) mit nichtkreisförmigem Querschnitt übergeht, dessen außenliegende Begrenzungswand der zugeordneten längsseitigen Außenwand (5) des Grundkörpers (1) entspricht und der zweite Strömungskanal (3) im Grundkörper (1) zwischen den Anschlußquerschnitten jeweils ohne Richtungs- oder Querschnittsänderung ausgestaltet ist, wobei dieser zweite Strömungskanal (3) im Bereich des höhenversetzt angeordneten Abschnittes (4) des ersten Strömungskanals (2) eine zu seiner Längsachse vorzugsweise senkrechte Abzweigung (6) aufweist, die zwischen der innenliegenden Begrenzungswand des höhenversetzt angeordneten Abschnittes (4) des ersten Strömungskanals (2) und der diesem entgegengesetzten längsseitigen Außenwand (7) des Grundkörpers (1) ausgestaltet ist und in einen kreisförmigen Rohranschlußstutzen (8) übergeht und wobei der Strömungsquerschnitt des höhenversetzt angeordneten Strömungsabschnittes (4) denselben Flächeninhalt wie der Anschlußquerschnitt des zugeordneten ersten Strömungskanals (2) und die vorzugsweise senkrechte Abzweigung (6) denselben Flächeninhalt wie der zugeordnete Rohranschlußstutzen (8) aufweist.

2. Rohrkreuzungsfitting nach Anspruch 1,
gekennzeichnet dadurch,
daß der erste Strömungskanal (2) einen Rohranschlußstutzen (9) aufweist, der vorzugsweise rechtwinklig zur Mittellängsachse der zugeordneten Anschlußquerschnitte ausgestaltet ist.

3. Rohrkreuzungsfitting nach Anspruch 1,
gekennzeichnet dadurch,
daß der höhenversetzt angeordnete Strömungsabschnitt (4) des ersten Strömungskanals (2) eine annähernd trapezförmige Querschnittsfläche aufweist.

4. Rohrkreuzungsfitting nach Anspruch 1,
gekennzeichnet dadurch,
daß der Abstand zwischen den Anschlußquerschnitten des ersten und zweiten Strömungskanals (2;3) dem Stichmaß handelsüblicher Befestigungsschellen für Fußleisten entspricht.

5. Rohrkreuzungsfitting nach Anspruch 1 und 2,
gekennzeichnet dadurch,
daß der Abstand zwischen den Rohranschlußstutzen (9;8) des ersten und zweiten Strömungskanals (2;3) dem Stichmaß von Ventilheizkörpern entspricht.

## Claims

1. A pipe branch element consisting of a base body with two separate flow channels, each provided with circular connecting cross sections on the ends for pipelines, in particular for connecting heating elements mounted behind conventional kickplates to pipelines, characterized in that the first flow channel (2) in the base body (1) runs between the connecting cross sections into a flow section (4) having a non-circular cross section, arranged at an offset height with respect to the center longitudinal axis of the connecting cross sections, where the exterior bordering wall corresponds to the respective outside wall (5) of the base body (1) on the longitudinal side, and the second flow channel (3) between the connecting cross sections in the base body (1) is designed without any change in direction or cross section, where this second flow channel (3) has a branch (6) which is preferably perpendicular to its longitudinal axis in the area of the section (4) of the first flow channel (2) arranged with a height offset, said branch being designed with a height offset between the interior bordering wall of the section (4) of the first flow channel (2) and the outside wall (7) of the base body (1) opposite it on the longitudinal side and running into a circular pipe connection (8), and where the flow cross section of the flow section (4) arranged with a height offset has the same total area as the connecting cross section of the respective first flow channel (2), and the preferably perpendicular branch (6) has the same total area as the respective pipe connection (8).

2. A pipe branch element according to claim 1, characterized in that the first flow channel (2) has a pipe connection (9) which is preferably designed at a right angle to the central longitudinal axis of the respective connecting cross sections.

3. A pipe branch element according to claim 1, characterized in that the flow section (4) of the first flow channel (2) arranged with a height offset has an approximately trapezoidal cross-sectional area.

4. A pipe branch element according to claim 1, characterized in that the distance between the connecting cross sections of the first and second flow channel (2; 3) corresponds to the gauge of conventional mounting brackets for kickplates.

5. A pipe branch element according to claims 1 and 2, characterized in that the distance between the pipe connections (9; 8) of the first and second flow channels (2; 3) corresponds to the gauge of valve heating elements.

## Revendications

1. Raccord de croisement de tubes, se composant d'un corps de base avec deux canaux d'écoulement séparés, auxquels sont associés chaque fois sur les faces respectives des sections de raccord circulaires aux canalisations, en particulier pour le raccordement d'éléments de chauffage, à ces canalisations qui sont montés derrière des plinthes du commerce, caractérisé en ce que le premier canal d'écoulement (2) dans le corps de base (1) entre les sections de raccord se transforme en un tronçon d'écoulement (4) ayant une section transversale non circulaire et placé décalé vers le haut par rapport à l'axe médian des sections de raccord, tronçon dont la paroi limite extérieure correspond à la paroi extérieure (S) du long côté associée du corps de base (1) et le deuxième canal d'écoulement (3) dans le corps de base (1) entre les sections de raccord est réalisé respectivement sans variation de direction et de section ; ce deuxième canal d'écoulement (3) comporte dans la zone du tronçon (4) placé décalé vers le haut du premier canal d'écoulement (2) une dérivation (6) par rapport à son axe longitudinal, de préférence verticale, qui est formée entre la paroi limite intérieure du tronçon (4) décalé vers le haut du premier canal d'écoulement (2) et la paroi extérieure (7) longitudinale opposée à celui-ci du corps de base (1) et qui se transforme en un ajutage de conduite circulaire (8) et la section d'écoulement du tronçon (4) placé décalé vers le haut comporte la même superficie que la section de raccord du premier canal d'écoulement (2) associé et la dérivation de préférence verticale (6) comporte la même superficie que l'ajutage de raccord tubulaire (8) associé.

2. Raccord de croisement de tubes, selon la revendication 1, caractérisé en ce que le premier canal d'écoulement (2) comporte un ajutage de raccord de tubes (9), qui est formé de préférence à angle droit par rapport à l'axe longitudinal moyen de la section de raccord associée.

3. Raccord de croisement de tubes selon la revendication 1, caractérisé en ce que le troncon d'écoulement (4) disposé décalé vers le haut du premier canal d'écoulement (2) comprend une surface de section transversale approximativement trapézoïdale.

4. Raccord de croisement de tubes selon la revendication 1, caractérisé en ce que la distance entre les sections de raccord du premier et du deuxième canal d'écoulement (2 ; 3) correspond au calibre des brides de fixation du commerce pour des plinthes.

5. Raccord de croisement de tubes selon les revendications 1 et 2, caractérisé en ce que la distance entre les raccords de tubes (9 ; 8) du premier et du deuxième canal d'écoulement (2 ; 3) correspond au calibre d'éléments de chauffage à soupape.
